# EUROPÄISCHE PATENTSCHRIFT

(11) **EP 3 202 521 B1**
(45) Veröffentlichungstag und Bekanntmachung des Hinweises auf die Patenterteilung: **27.05.2020**
(21) Anmeldenummer: 16153860.8
(22) Anmeldetag: 02.02.2016
(51) Int. Cl.: B23K 9/167, B23K 9/173, B23K 9/32, B23K 26/08, C09J 5/00, B23K 26/242, B23K 26/60, F04D 29/26, B23K 101/00

(54) **FÜGEVERFAHREN ZUR HERSTELLUNG VON STOFFSCHLÜSSIGEN VERBINDUNGEN ZWISCHEN METALLTEILEN UND ENTSPRECHENDES VENTILATORRAD**
METHOD OF JOINING FOR MANUFACTURING AN ASSEMBLY OF METALLIC PARTS AND CORRESPONDING VENTILATOR WHEEL
PROCEDE D'ASSEMBLAGE EN VU DE FABRIQUER UN ASSEMBLAGE DE PIECES METALLIQUES ET ROUE DE VENTILATEUR CORRESPONDANTE

(43) Veröffentlichungstag der Anmeldung: 09.08.2017
(73) Patentinhaber: Punker GmbH, 24340 Eckernförde (DE)
(72) Erfinder: Wolf, Matthias, 24114 Kiel (DE); Klinger, Ralf, 24340 Eckernförde (DE); Möllers, Knud, 24782 Büdelsdorf (DE); Hornhardt, Christian, 24229 Dännischenhagen (DE)
(74) Vertreter: Patentanwälte Magenbauer & Kollegen Partnerschaft mbB

(56) Entgegenhaltungen:
- DE-A1- 10 261 262
- DE-A1- 19 903 647
- DE-A1-102010 021 075
- JP-A- S59 196 901
- JP-A- 2002 202 095
- US-A- 1 531 824
- US-A- 3 629 544
- US-A1- 2006 289 486

## Beschreibung

Die Erfindung betrifft ein Fügeverfahren zur Herstellung von stoff schlüssigen Verbindungen zwischen Metallteilen, und ein Ventilatorrad gemäß dem Oberbegriff der Ansprüche 1 und 5 (siehe, z.B., DE102 61 262 A1).

Dabei ist das Fügeverfahren dazu vorgesehen, Fügeteilträger und Fügeteile, wie sie beispielsweise bei der Herstellung von Ventilatorrädern eingesetzt werden, stoffschlüssig miteinander zu verbinden.

Ein aus solchen Komponenten hergestelltes Ventilatorrad kann beispielsweise als Radiallüfterrad, insbesondere mit rückwärtsgekrümmten Schaufeln, oder auch als Trommellaufrad ausgeführt sein, wie dies exemplarisch aus der DE 1 628 336 A bekannt ist. Hierbei besteht das Trommellaufrad aus einer großen Anzahl schmaler Lamellen, die die Schaufeln des Rades bilden und die zwischen zwei Endringen befestigt sind, deren Radius wesentlich größer als die Breite der Lamellen ist, so dass eine trommelförmige Konstruktion gebildet wird, die auf geeignete Weise mit einer Nabe verbunden ist, z.B. mit Hilfe einer kreisförmigen Platte, die an den Lamellen an deren Mitte befestigt ist. Dabei kann vorgesehen sein, dass die Schaufeln vor einer Herstellung einer stoffschlüssigen Verbindung mit den Endringen in einer Hilfsvorrichtung aufgenommen werden, um vor einer Verbindung mit den Endringen eine ordnungsgemäße Ausrichtung der Schaufeln zu gewährleisten. In einem nachfolgenden Schritt kann einer der Endringe auf die Hilfsvorrichtung aufgelegt werden, um anschließend die angestrebte stoffschlüssige Verbindung zwischen dem Endring und den Schaufeln, beispielsweise mittels eines Schweißverfahrens, herzustellen.

Die DE 102 61 262 A1 offenbart lasergeschweißte Laufräder für Turbinen und Verdichter, die aus einem Rotationsgrundkörper und einzeln gefertigten Leitschaufeln hergestellt ist, wobei ein Leitschaufelfuß mit einer Stumpfnaht einer Laser- und/oder Elektronenstrahlschweißanlage in den Rotationsgrundkörper eingeschweißt wird.

Die US 2006/289486 A1 ist auf die Herstellung eines Mehrschicht-Kochtopfs gerichtet, wobei eine Verbindung der einzelnen Materialschichten durch Schalpressen oder Löten hergestellt wird.

Die US 3 629 544 A ist auf das Widerstandsschweißen von beschichteten Metallmaterialien ausgerichtet, wobei eine Schweißverbindung in einem metallisch blanken Bereich hergestellt wird, der in vorausgehenden Arbeitsschritten durch spanende Bearbeitung vorbereitet wird.

Aus der JP 2002 202095 A ist ein Lüfterrad aus Kunststoff bekannt, bei dem Nuten zur Aufnahme von Schaufeln bereits im Kunststoffspritzgussverfahren erzeugt werden.

Die Aufgabe der Erfindung besteht darin, ein Fügeverfahren und ein Ventilatorrad bereitzustellen, bei denen eine kostengünstige und präzise Herstellung von stoffschlüssigen Verbindungen zwischen dem Fügeteilträger und den Fügeteilen gewährleistet werden kann.

Diese Aufgabe wird für ein Fügeverfahren der eingangs genannten Art mit den Merkmalen des Anspruchs 1 gelöst. Hierbei sind die nachfolgenden Schritte vorgesehen: Einbringen wenigstens einer Einprägung in einen Fügeteilträger, wobei die Einprägung einen stufenartig ausgebildeten Randbereich mit einem Verlauf aufweist, der einem vorgegebenen Fügenahtverlauf entspricht, Anlegen eines Fügeteils an den Fügeteilträger, wobei ein Verbindungsbereich des Fügeteils angrenzend an den Randbereich positioniert wird, Durchführen eines Fügevorgangs, insbesondere eines Klebevorgangs und/oder eines Schweißvorgangs, zur Schaffung einer Fügeverbindungszone zwischen dem stufenartigen Randbereich der Einprägung und dem an den Randbereich angrenzenden Verbindungsbereich des Fügeteils.

Die Einprägung im Fügeteilträger ermöglicht eine überlappende Anordnung des Fügeteils gegenüber dem Fügeteilträger. Hierdurch wird erreicht, dass bei dem nachfolgenden Fügevorgang ein zwischen Fügeteilträger und Fügeteil ausgebildeter Fügespalt minimal ausfällt, ohne besonders enge Toleranzanforderungen an den Fügeteilträger und/oder das Fügeteil stellen zu müssen. Dies ist darauf zurückzuführen, dass durch die überlappende Anordnung eine Seitenfläche des Fügeteils mit dem Randbereich des Fügeteilträgers gefügt, insbesondere verklebt und/oder verschweißt, wird. Demgegenüber findet beim Stand der Technik eine Verschweißung einer Stirnseite des Fügeteils mit dem Fügeteilträger statt, wobei hier zur Einhaltung eines minimalen Schweißspalts enge Toleranzanforderungen für Geometrien der Stirnseite des Fügeteils und der Oberfläche des Fügeteilträgers eingehalten werden müssen, die sich negativ auf die Herstellungskosten des Fügeteilträgers und des Fügeteils auswirken.

Vorteilhafte Weiterbildungen der Erfindung sind Gegenstand der Unteransprüche.

Zweckmäßig ist es, wenn die wenigstens eine Einprägung während einer Durchführung eines Beschneidevorgangs und/oder eines Umformvorgangs für den Fügeteilträger hergestellt wird. Bei der Herstellung des Fügeteilträgers durch Beschneiden und/oder Umformen sind in der Regel spezifische Werkzeuge erforderlich, die mit hoher Präzision hergestellt werden müssen, um die gewünschte Fertigungsqualität für den Fügeteilträger zu gewährleisten. Bei derartigen Werkzeugen ist eine Integration eines zusätzlichen Arbeitsbereichs, mit dessen Hilfe die wenigstens eine Einprägung am Fügeteilträger hergestellt werden kann, mit überschaubarem Aufwand möglich. Ferner wird durch eine Herstellung der wenigstens einen Einprägung im Zuge eines Beschneidevorgangs und/oder eines Umformvorgangs eine präzise Anordnung und Ausrichtung der wenigstens einen Einprägung gegenüber den im Zuge des Beschneidevorgangs und/oder Umformvorgangs am Fügeteilträger erzeugten Geometrien gewährleistet.

In weiterer Ausgestaltung des Verfahrens ist vorgesehen, dass bei der Herstellung der Einprägung zwei parallel zueinander verlaufende stufenartige Randbereiche erzeugt werden, die einander gegenüberliegende Oberflächen aufweisen, wobei ein Abstand der gegenüberliegenden Oberflächen einer Materialstärke des Verbindungsbereichs des Fügeteils entspricht. Hierdurch kann das Fügeteil zur Vorbereitung des Fügevorgangs, insbesondere des Schweißvorgangs, in die Einprägung eingesteckt werden. Dadurch kann zum einen eine präzise Ausrichtung des Fügeteils gegenüber dem Fügeteilträger gewährleistet werden, zum anderen können aufwändige Stütz- und Ausrichtmaßnahmen für das Fügeteil vermieden werden. Weiterhin ist bei einer Ausgestaltung des Fügevorgangs als Schweißvorgang vorteilhaft, dass zwischen dem Fügeteilträger und dem Fügeteil bereits vor der Herstellung der in diesem Fall als Schweißnaht ausgebildeten Fügenaht aufgrund der flächigen Anlage des Verbindungsbereichs des Fügeteils an den Oberflächen der stufenartigen Randbereiche eine gute Wärmeübertragung gewährleistet ist. Hiermit wird bei der Durchführung des Schweißvorgangs ein gleichartiges Aufschmelzen sowohl des Fügeteilträgers als auch des Fügeteils im Bereich der Fügenaht gewährleistet und der Schweißvorgang kann mit einer hohen Prozesssicherheit ohne lokale Materialüberhitzung durchgeführt werden.

Gemäß der Erfindung ist vorgesehen, dass der Fügevorgang als Klebevorgang und/oder als Laserschweißvorgang oder als Metall-Schutzgasschweißvorgang oder als WIG-Schweißvorgang, insbesondere mit einem Schweißroboter, durchgeführt wird. Der Klebevorgang kann beispielsweise unter Verwendung eines 2-Komponenten-Klebers oder eines lösemittelhaltigen oder lösemittelfreien Klebers oder eines, insbesondere thermisch, aktivierbaren Klebers durchgeführt werden. Der Laserschweißvorgang kann wahlweise mit reiner Wärmezufuhr oder als Kombination einer Zufuhr von Wärme und Zusatzmaterial durchgeführt werden. In gleicher Weise gilt dies auch für den WIG-Schweißvorgang, demgegenüber ist beim Metall-Schutzgasschweißvorgang grundsätzlich eine Zufuhr von Zusatzmaterial vorgesehen.

Die Aufgabe der Erfindung wird für ein Ventilatorrad mit den Merkmalen des Anspruchs 5 gelöst. Das Ventilatorrad ist zur stoffschlüssigen Verbindung mit einem Fügeteil vorgesehen und umfasst einen Grundkörper aus Blech, der an einer Kontaktoberfläche mit wenigstens einer Einprägung versehen ist, die wenigstens einen stufenartig ausgebildeten Randbereich aufweist, der einen Aufnahmebereich für ein Fügeteil bestimmt, wobei der Randbereich längs eines vorgebbaren Fügenahtverlaufs für eine Schweißverbindung zwischen dem Grundkörper und dem Fügeteil ausgebildet ist. Der Grundkörper wird exemplarisch zunächst aus einer planparallelen Blechtafel, insbesondere einer Stahlblechtafel, durch einen oder mehrere Trennvorgänge aus der Gruppe Stanzen, Laserschneiden, Stanznibbeln herausgetrennt. Anschließend wird der Grundkörper umgeformt, wobei im Zuge dieses Umformvorgangs auch die Einbringung der wenigstens einen Einprägung, vorzugsweise an einer größten Oberfläche des Grundkörpers, die auch als Kontaktfläche bezeichnet wird, stattfindet. Sofern zur Herstellung des Grundkörpers ein Stanzvorgang vorgesehen sein sollte, kann bereits im Zuge dieses Stanzvorgangs auch die wenigstens Einprägung hergestellt werden, insbesondere mit dem gleichen Werkzeug, das auch der Durchführung des Stanzvorgangs eingesetzt wird. Exemplarisch ist vorgesehen, dass am Randbereich der Einprägung eine Oberfläche ausgebildet ist, die zumindest im Wesentlichen quer zur Kontaktoberfläche des Grundkörpers ausgerichtet ist und an der das Fügeteil mit einer Seitenfläche zur Anlage kommt. Sofern es sich bei dem Fügeteil rein exemplarisch um eine Schaufel eines Ventilatorrads handelt, wird die Seitenfläche des Fügeteils üblicherweise durch die größte Oberfläche der Schaufel gebildet. Durch die seitliche Anlage der Seitenfläche des Fügeteils am Randbereich der Einprägung wird ein vorteilhafter, vorzugsweise sehr kleiner Fügespalt bestimmt, der Fügen, insbesondere eine Verklebung und/oder eine Verschweißung, des Fügeteils mit dem Fügeteilträger mit einer hohen Prozesssicherheit gewährleistet.

Bei einer vorteilhaften Weiterbildung des Ventilatorrades ist vorgesehen, dass wenigstens einer der Randbereiche als Vorsprung über die umgebende Kontaktoberfläche des Grundkörpers abragt. Hierdurch wird die Zugänglichkeit desjenigen Bereichs, in dem die Fügenaht zwischen Fügeteilträger und Fügeteil erzeugt werden soll, verbessert. Dies gilt insbesondere beim Einsatz von Klebeverfahren, bei denen der Klebstoff mit Hilfe einer Düse an der Fügenaht platziert werden soll oder auch beim Einsatz von Schweißverfahren, bei denen ein Zusatzwerkstoff und/oder ein Schutzgas zugeführt werden, da eine solche Zufuhr vorzugsweise unmittelbar an der Fügenaht erfolgen sollte.

In weiterer Ausgestaltung des Ventilatorrades ist vorgesehen, dass der Grundkörper an einer der Kontaktoberfläche entgegengesetzten Gegenoberfläche wenigstens eine Vertiefung aufweist, die seitlich versetzt gegenüber der Einprägung angeordnet und längs der Einprägung erstreckt ist. Der Zweck dieser Vertiefung besteht darin, eine Materialstärke für den Fügeteilträger im Bereich der Einprägung innerhalb eines vorteilhaften Intervalls zu halten, um eine lokale Schwächung des Fügeteilträgers zu vermeiden.

Bevorzugt ist beim Ventilatorrad eine Blechdicke im Bereich der Einprägung um weniger als 50 Prozent gegenüber einer ursprünglichen Blechdicke reduziert, wobei eine Tiefe der Einprägung wenigstens 50 Prozent der ursprünglichen Blechdicke beträgt. Beispielhaft ist vorgesehen, dass das Fügeteil ebenfalls als Blechteil ausgebildet ist und eine Materialstärke aufweist, die identisch oder geringfügig kleiner als die Materialstärke des Fügeteilträgers ist. Durch die vorgegebene Tiefe der Einprägung mit mindestens 50 Prozent der ursprünglichen Blechdicke wird bei der Anbringung des Fügeteils in der Einprägung des Fügeteilträgers und vor der Durchführung des Fügevorgangs, insbesondere des Schweißvorgangs, eine ausreichende Überlappung zwischen Fügeteil und Fügeteilträger gewährleistet, die eine Prozesssicherheit bei der Durchführung des Fügevorgangs, insbesondere Schweißvorgangs, begünstigt.

Vorteilhaft für das Ventilatorrad ist es, wenn die einander gegenüberliegenden Oberflächen des Aufnahmebereichs einen Abstand aufweisen, der einer Materialstärke des im Aufnahmebereich zu fügenden, insbesondere einzuschweißenden, Fügeteils entspricht. Beim Einstecken des Fügeteils in die Einprägung wird das Fügeteil gegen die dabei gewählte Einsteckeinrichtung vorzugsweise kraftschlüssig in der Einprägung aufgenommen. In wenigstens einer anderen, quer zur Einsteckrichtung ausgerichteten Raumrichtung ist eine formschlüssige Aufnahme des Fügeteils am Fügeteilträger vorgesehen. Beispielsweise kann in Abhängigkeit von der Ausgestaltung der Einprägung und des Fügeteils eine formschlüssige Aufnahme sowohl längs des Verlaufs der Fügenaht als auch quer zum Verlauf der Fügenaht gewährleistet werden, so dass das Fügeteil nach dem Einstecken in die Einprägung in eindeutiger Lage gegenüber dem Fügeteilträger ausgerichtet ist.

Das Fügeverfahren kann bei der Herstellung des erfindungsgemäßen Ventilatorrads eingesetzt werden, das zur Förderung eines gasförmigen Fluids ausgebildet ist und das mehrere Schaufeln umfasst, die in vorgebbarer Winkelteilung in einem ringförmigen Raumvolumen um eine Rotationsachse angeordnet sind und die mit ihren axialen, einander entgegengesetzten Endbereichen jeweils an Trägermitteln festgelegt sind, wobei ein erstes Trägermittel als scheibenförmige Ronde koaxial zur Rotationsachse ausgebildet ist und eine Nabenanordnung umfasst und wobei ein zweites Trägermittel als Ring koaxial zur Rotationsachse ausgebildet ist und wobei wenigstens eines der Trägermittel als Fügeteilträger ausgebildet ist und wobei wenigstens eine der Schaufeln als Fügeteil ausgebildet und stoffschlüssig mit dem Fügeteilträger verbunden ist.

Vorteilhafte Ausführungsformen der Erfindung sind in der Zeichnung dargestellt. Dabei zeigt:
- Figur 1: eine perspektivische Darstellung eines ringförmig ausgebildeten Fügeteilträgers, der als Deckscheibe für ein Ventilatorrad eingesetzt werden kann und bei dem mehrere Einprägungen zur Aufnahme von Schaufeln an einer Kontaktoberfläche ausgebildet sind,
- Figur 2: eine perspektivische Darstellung eines Abschnitts des ringförmig ausgebildeten Fügeteilträgers gemäß der Figur 1,
- Figur 3: eine Vorderansicht einer zweiten Ausführungsform eines Fügeteilträgers, der rein exemplarisch für die Festlegung eines U-förmig ausgebildeten Schachtteils vorgesehen ist,
- Figur 4: eine Vorderansicht einer dritten Ausführungsform eines Fügeteilträgers, der rein exemplarisch für die Festlegung eines U-förmig ausgebildeten Schachtteils vorgesehen ist,
- Figur 5: eine Schnittdarstellung einer Werkzeuganordnung zur Einbringung einer Einprägung in den Fügeteilträger gemäß der Figur 3,
- Figur 6: eine Schnittdarstellung des Fügeteilträgers gemäß der Figur 3 mit einem eingeschweißten Fügeteil, und
- Figur 7: eine perspektivische Darstellung eines Ventilatorrads.

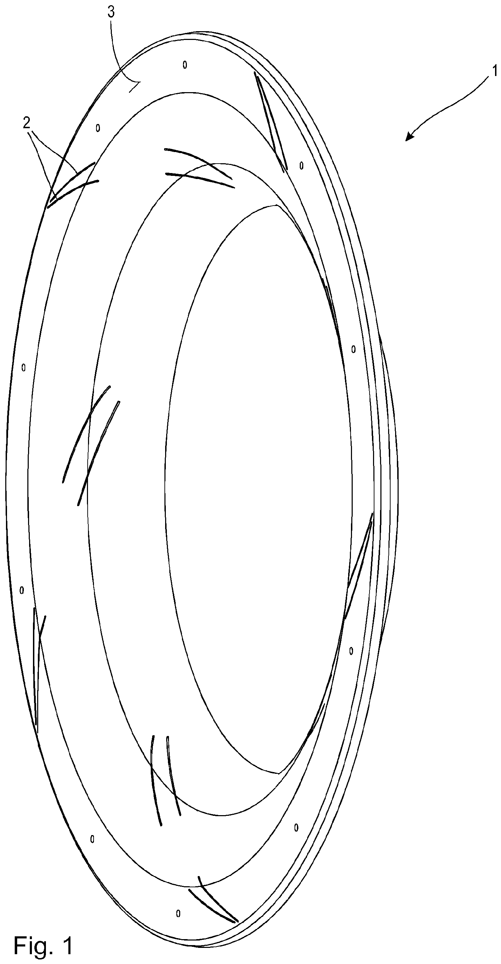

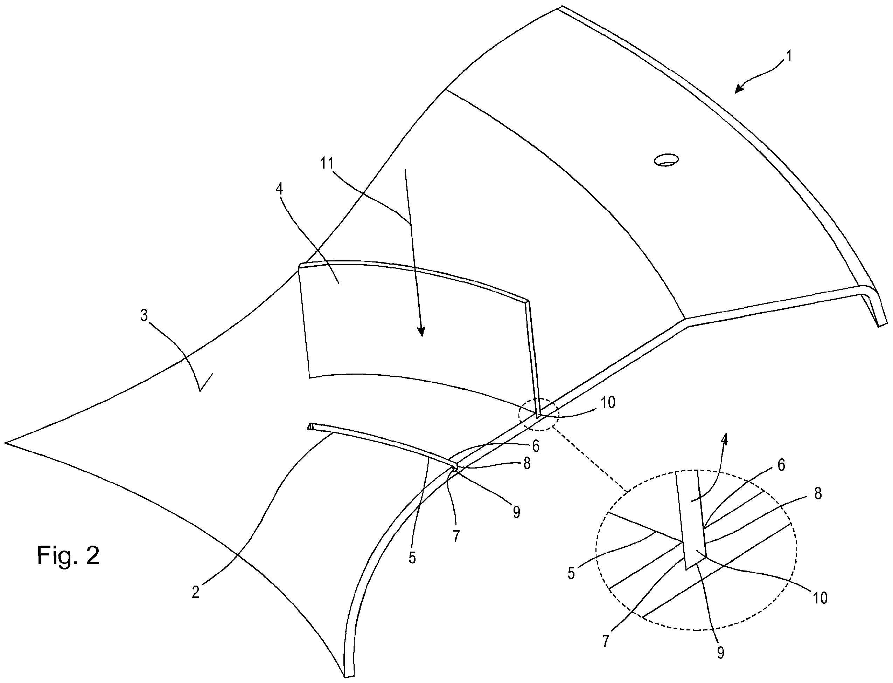

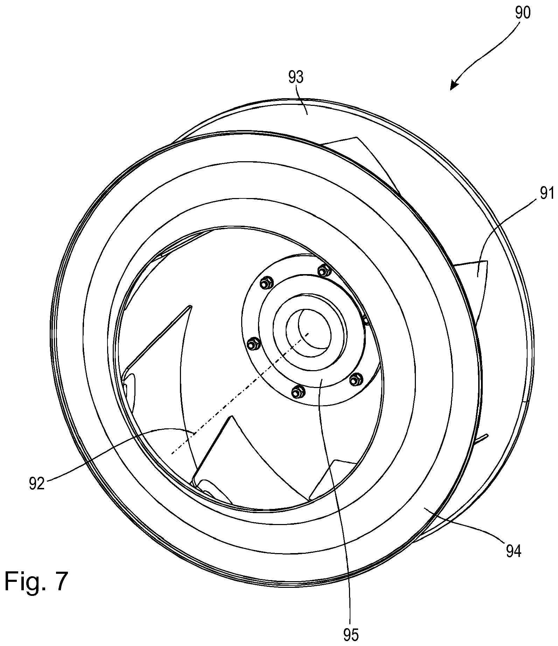

Die Figuren 1 und 2 zeigen rein exemplarisch eine Form eines Fügeteilträgers 1, der beispielhaft als ringförmig ausgebildete Deckscheibe für ein Ventilatorrad 90 gemäß der Erfindung eingesetzt werden kann, wie es rein schematisch in der Figur 7 dargestellt ist. Der Fügeteilträger 1 kann, wie nachstehend ausgeführt wird, zur Verwendung als in Figur 7 dargestellte Deckscheibe ausgebildet sein.

Exemplarisch ist davon auszugehen, dass der Fügeteilträger 1 als Blechteil ausgebildet ist, das aus einer nicht dargestellten ebenen Blechtafel, insbesondere durch Laserschneiden oder Stanzen, herausgetrennt wurde. In einem nachfolgenden oder zeitgleichen Arbeitsschritt wird der ursprünglich eben ausgebildete Grundkörper des Fügeteilträgers 1 zu dem profilierten Rotationskörper umgeformt, wie er in der Figur 1 dargestellt ist. Beispielhaft ist vorgesehen, dass im Zuge dieser Umformung des gesamten Fügeteilträgers 1 auch die Einprägungen 2 in eine Oberfläche des Fügeteilträgers 1 eingebracht wurden. Die mit den Einprägungen 2 versehene Oberfläche des Fügeteilträgers 1 wird auch als Kontaktfläche 3 bezeichnet, da in einem nachfolgenden Bearbeitungsschritt in zumindest eine der Einprägungen 2 ein Fügeteil 4 eingesteckt wird, wie dies schematisch in der Figur 2 dargestellt ist. Die Einprägungen 2 sind dabei entsprechend einem Verlauf einer zwischen dem Fügeteilträger 1 und einem Fügeteil zu erstellenden Fügenaht geformt, wobei eine Erstreckung der Einprägung 2 gleicher oder kleiner als eine Erstreckung des jeweiligen Fügeteils sein kann. Rein exemplarisch sind die Einprägungen 2 in der Figur 1 jeweils paarweise angeordnet, hierdurch wird eine Festlegung von nicht dargestellten Fügeteilen ermöglicht, die in der Art von Hohlkörpern ausgebildet sind.

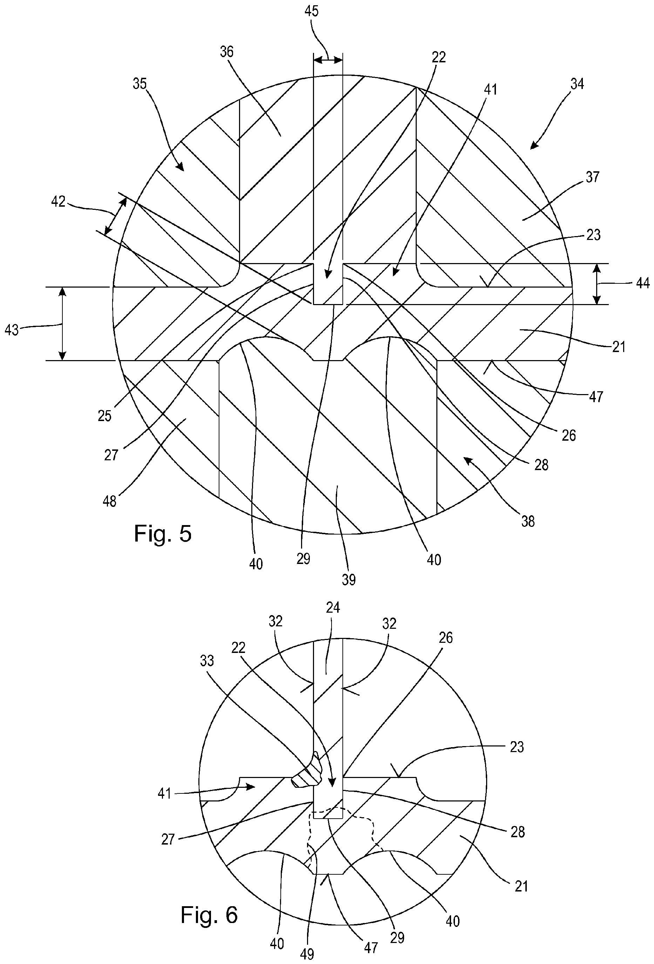

Wie aus der Schnittdarstellung der Figur 2 entnommen werden kann, ist die Einprägung 2 als nutartiger Schlitz ausgebildet, in den ein Fügeteil 4, bei dem es sich um eine Schaufel für ein Ventilatorrad handelt, mit einem stirnseitigen Verbindungsbereich 10 eingesteckt werden kann. Anschließend wird das Fügeteil 4 mit dem Fügeteilträger 1 gemäß der Erfindung verklebt oder verschweißt wie dies rein schematisch in der Figur 6 dargestellt ist.

Aus der Figur 2 ist zu entnehmen, dass die rein exemplarisch nahezu gleichartig ausgebildeten Einprägungen 2 jeweils mit zwei parallel zueinander verlaufenden, stufenartigen Randbereichen 5, 6 ausgebildet sind, die jeweils einander entgegengesetzte Oberflächen 7, 8 aufweisen. Dabei begrenzen die Oberflächen 7, 8 zusammen mit einer Grundfläche 9 jeweils die exemplarisch U-förmig profilierte Einprägung 2. Beispielhaft sind die Einprägung 2 und das Fügeteil 4 derart aufeinander abgestimmt, dass bei einem Einsteckvorgang für das Fügeteil 4 längs einer Einsteckrichtung 11 der Verbindungsbereich 10 des Fügeteils 4 teilweise kraftschlüssig und teilweise formschlüssig in der Einprägung 2 aufgenommen wird. Im Hinblick auf Kräfte, die entgegen der Einsteckrichtung 11 wirken, ist davon auszugehen, dass aufgrund der Anpassung der Geometrie der Einprägung 2 und des Verbindungsbereichs 10 des Fügeteils 4 eine kraftschlüssige Verbindung zwischen Fügeteilträger 1 und Fügeteil 4 besteht. Im Hinblick auf Kräfte, die quer oder senkrecht zur Einsteckrichtung 11 und/oder längs der Einsteckrichtung 11 ausgerichtet sind, liegt eine formschlüssige Verbindung zwischen Fügeteilträger 1 und Fügeteil 4 vor.

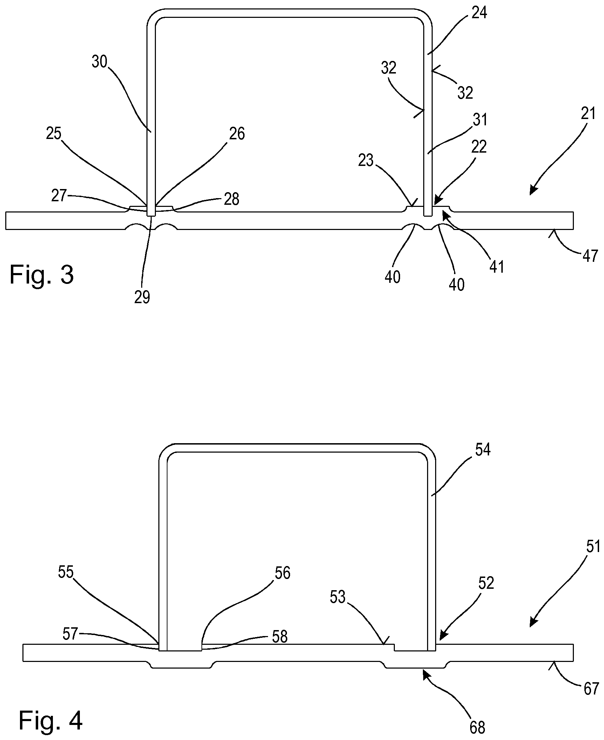

In der Figur 3 ist eine zweite Ausführungsform eines Fügeteilträgers 21 dargestellt, bei der Randbereiche 25, 26 von Einprägungen 22 als Vorsprünge ausgebildet sind. Ansonsten ist eine Gestaltung der Einprägungen 22 übereinstimmend mit der Gestaltung der Einprägungen 2, wie sie aus den Figuren 1 und 2 bekannt sind. Die Einprägungen 22 weisen ebenfalls gegenüberliegende Oberflächen 27 und 28 auf, die zusammen mit einer exemplarisch eben ausgebildeten Grundfläche 29 einen U-förmigen Querschnitt der Einprägungen 22 bestimmen. Rein exemplarisch sind in den Einprägungen 22 jeweils freie Schenkel eines U-förmig profilierten Fügeteils 24 aufgenommen. Beispielhaft wird davon ausgegangen, dass das Fügeteilträger 21 und das Fügeteil 24 aus Stahlblech hergestellt sind und dass das Fügeteil 24 kraftschlüssig in den beiden Einprägungen 22 des Fügeteilträgers 21 eingesteckt ist. Bei einem nachfolgenden Schweißvorgang, der beispielsweise als Metall-Schutzgas-Schweißvorgang durchgeführt werden kann, wird die Fügenaht in einer räumlichen Ecke ausgebildet, die durch die Kontaktfläche 23 des Fügeteilträgers 21 im Bereich der Einprägung 22 und eine exemplarisch rechtwinklig dazu ausgerichtete Seitenfläche 32 des Fügeteils 24 ergibt. Eine rein schematische Darstellung der Fügenaht 33, also des gemeinsamen Verbunds aus aufgeschmolzenem Material des Fügeteilträgers 21, des Fügeteils 24 sowie zugeführtem Zusatzwerkstoff, ist der Figur 6 zu entnehmen. Ferner ist in der Figur 6 in gestrichelter Darstellung eine von mehreren weiteren Möglichkeiten zum Fügen des Fügeteilträgers 21 und des Fügeteils 24 angedeutet, hier ist eine Verschweißung von der Gegenoberfläche 47 des Fügeteilträgers 21 vorgesehen.

Die Einprägung 22 in den Fügeteilträger 21 wird mit einem Umformwerkzeug 34 hergestellt, wie es schematisch in einer Schnittdarstellung in der Figur 5 gezeigt ist. Das Umformwerkzeug 34 umfasst ein Oberwerkzeug 35, das rein exemplarisch einen Sickenstempel 36 und einen den Sickenstempel 36 umgebenden Abstreifer 37 umfasst. Ferner umfasst das Umformwerkzeug 34 ein Unterwerkzeug 38, das einen Gegenformstempel 39 und einen zugeordneten Abstreifer 48 umfasst. Dabei ist das Umformwerkzeug 34 derart auf den Fügeteilträger 21 angepasst, dass bei Durchführung des Umformvorgangs die Einprägung 22 in die Kontaktfläche 23 hergestellt wird und mit Hilfe des Gegenformstempels 39 zwei seitlich zur Einprägung 22 versetzt angeordnete Vertiefungen 40 in einer Gegenoberfläche 47 ausgebildet werden, die sich in gleicher Weise wie die Einprägung 22 entlang dem vorgegebenen Fügenahtverlauf erstrecken. Diese Vertiefungen 40 ermöglichen es, dass die Einprägung 22 in einem Vorsprung 41 ausgebildet ist, der erhöht gegenüber der umliegenden Kontaktfläche 23 angeordnet ist, ohne dass hierdurch eine unerwünschte Verringerung der Materialstärke für den Fügeteilträger 21 im Bereich der Einprägung 22 entsteht. Rein exemplarisch ist der Darstellung der Figur 5 zu entnehmen, dass eine minimale Materialstärke 42 zumindest 50 Prozent einer Materialstärke 43 des Fügeteilträgers 21 beträgt. Ferner ist der Darstellung der Figur 5 beispielhaft zu entnehmen, dass eine Tiefe 44 der Einprägung 22 mehr als 50 Prozent der Materialstärke 43 beträgt. Darüber hinaus kann der Darstellung der Figur 5 exemplarisch entnommen werden, dass ein Abstand 45 zwischen den gegenüberliegenden Oberflächen 27, 28 kleiner als die Materialstärke 43 des Fügeteilträgers 21 ist. Ferner ist der Darstellung der Figur 6 zu entnehmen, dass eine Materialstärke 46 des Fügeteils 24 an den Abstand 45 der gegenüberliegenden Oberflächen 47 und 28 angepasst ist, um die gewünschte kraftschlüssige Festlegung des Fügeteils 24 in der Einprägung 22 bezüglich der Einsteckrichtung 11 zu gewährleisten.

Bei der dritten Ausführungsform eines Fügeteilträgers 51 sind die Einprägungen 52 für eine einseitige Anlage des Fügeteils 54 ausgebildet. Dabei weisen die Einprägungen 52 in gleicher Weise wie die Einprägungen 2 und 22 jeweils gegenüberliegende Oberflächen 57, 58 auf, die rein exemplarisch parallel zueinander ausgerichtet sind. Abweichend von den Einprägungen 2 und 22 sind die Oberflächen 57, 58 der Einprägungen 52 jedoch mit einem Abstand 65 ausgebildet, der erheblich größer als eine Materialstärke 66 des Fügeteils 54 gewählt ist. Ferner sind die Einprägungen 52 derart im Fügeteilträger 51 angebracht, dass Randbereiche 55 der Einprägungen 52 auf dem gleichen Niveau liegen wie die umgebende Kontaktfläche 53. Hierzu ist vorgesehen, dass einer der Kontaktfläche 53 entgegengesetzten Gegenoberfläche 67 jeweils unterhalb der Einprägung 52 ein Vorsprung 68 ausgebildet ist, der derart auf die Einprägung 52 abgestimmt ist, das der Fügeteilträger 51 auch im Bereich der Einprägungen 52 eine Materialstärke 62 aufweist, die nur geringfügig kleiner als eine Materialstärke 63 des Fügeteilträgers 51 abseits der Einprägungen 52 ist. Eine Tiefe 64 der Einprägung 52 ist exemplarisch größer als die Materialstärke 66 des Fügeteils 54 gewählt. Hierdurch wird für die Durchführung des Schweißvorgangs ein ausreichender Wärmeaustausch zwischen den Fügeteilträger 51 und dem Fügeteil 54 begünstigt, womit der Schweißvorgang prozesssicher durchgeführt werden kann.

Gemäß der Erfindung ist vorgesehen, den vorstehend beschriebenen Fügeteilträger 1 oder einen nicht dargestellten Fügeteilträger mit Einprägungen 22 bzw. 52 gemäß den Fügeteilträgern 21 oder 51 gemäß der Erfindung, zur Herstellung eines Ventilatorrads 90 einzusetzen, wie es in der Figur 7 rein exemplarisch dargestellt ist. Ein derartiges Ventilatorrad 90 wird zur Förderung eines gasförmigen Fluids verwendet und umfasst mehrere Schaufeln 91, die in vorgebbarer Winkelteilung in einem ringförmigen Raumvolumen um eine Rotationsachse 92 angeordnet sind. Die Schaufeln 91 sind mit ihren axialen, einander entgegengesetzten Endbereichen jeweils an Trägermitteln 93, 94 festgelegt sind. Dabei ist ein erstes Trägermittel als scheibenförmige Ronde 93 koaxial zur Rotationsachse 92 ausgebildet und umfasst eine Nabenanordnung 95, ein zweites Trägermittel ist hingegen als Ring 94 koaxial zur Rotationsachse 92 ausgebildet. Dabei ist vorgesehen, dass wenigstens eines der Trägermittel 93, 94, insbesondere beide Trägermittel 93 und 94, als Fügeteilträger mit Einprägungen 2, 22 oder 52 ausgebildet ist, wie sie von den Fügeteilträgern 1 oder 21 oder 51 bekannt sind. Ferner ist wenigstens eine der Schaufeln 91 als Fügeteil ausgebildet und stoffschlüssig mit dem Fügeteilträger 93, 94 verschweißt.

## Patentansprüche

1. Fügeverfahren zur Herstellung von stoffschlüssigen Verbindungen zwischen Metallteilen (1, 4; 21, 24; 51, 54), **gekennzeichnet durch** die folgenden Schritte: Einbringen wenigstens einer Einprägung (2; 22; 52) in einen Fügeteilträger (1; 21; 51), wobei die Einprägung (2; 22; 52) einen stufenartig ausgebildeten Randbereich (5, 25; 25, 26; 55, 56) mit einem Verlauf aufweist, der einem vorgegebenen Fügenahtverlauf entspricht, Anlegen eines Fügeteils (4; 24; 54) an den Fügeteilträger (1; 21; 51), wobei ein Verbindungsbereich (10; 32) des Fügeteils (4; 24; 54) angrenzend an den Randbereich (5, 6; 25, 26; 55, 56) positioniert wird, Durchführen eines Fügevorgangs zur Schaffung einer Fügeverbindungszone (33) zwischen dem stufenartigen Randbereich (5, 6; 25, 26; 55, 56) der Einprägung (2; 22; 52) und dem an den Randbereich (5, 6; 25, 26; 55, 56) angrenzenden Verbindungsbereich (10; 32) des Fügeteils (4; 24; 54), wobei der Fügevorgang als Klebevorgang und/oder als Laserschweißvorgang oder als Metall-Schutzgasschweißvorgang oder als WIG-Schweißvorgang durchgeführt wird.

2. Fügeverfahren nach Anspruch 1, **dadurch gekennzeichnet, dass** die wenigstens eine Einprägung (2; 22; 52) während einer Durchführung eines Beschneidevorgangs und/oder eines Umformvorgangs für den Fügeteilträger (1; 21; 51) hergestellt wird.

3. Fügeverfahren nach Anspruch 1 oder 2, **dadurch gekennzeichnet, dass** bei der Herstellung der Einprägung (2; 22) zwei parallel zueinander verlaufende stufenartige Randbereiche (5, 6; 25, 26) erzeugt werden, die einander gegenüberliegende Oberflächen (7, 8; 27, 28) aufweisen, wobei ein Abstand (45; 65) der gegenüberliegenden Oberflächen (7, 8; 27, 28) einer Materialstärke (46) des Verbindungsbereichs (10; 32) des Fügeteils entspricht (4; 24).

4. Fügeverfahren nach Anspruch 1, 2 oder 3, **dadurch gekennzeichnet, dass** der Fügevorgang mit einem Fügeroboter durchgeführt wird.

5. Ventilatorrad mit einer als ringförmiger Fügeteilträger (1) ausgebildeten Deckscheibe zur stoffschlüssigen Verbindung mit einer als Fügeteil (4; 24; 54) ausgebildeten Schaufel, wobei der Fügeteilträger einen Grundkörper aus Blech umfasst, **dadurch gekennzeichnet, dass** der Grundkörper an einer Kontaktoberfläche (3; 23; 53) mit wenigstens einer Einprägung (2; 22; 52) versehen ist, die wenigstens einen stufenartig ausgebildeten Randbereich (5, 6; 25, 26; 55, 56) aufweist, der einen Aufnahmebereich für ein Fügeteil (4; 24; 54) bestimmt, wobei der Randbereich (5, 6; 25, 26; 55, 56) längs eines vorgebbaren Fügenahtverlaufs für eine Fügeverbindung zwischen dem Grundkörper (1; 21; 51) und dem Fügeteil (4; 24; 54) ausgebildet ist, sowie mit einem Fügeteil (4; 24; 54), das mit einem stirnseitigen Verbindungsbereich (10) in den Aufnahmebereich für das Fügeteil (4; 24; 54) eingesteckt ist und das mit dem Fügeteilträger (1) verklebt oder verschweißt ist.

6. Ventilatorrad nach Anspruch 5, **dadurch gekennzeichnet, dass** wenigstens einer der Randbereiche (25, 26) des Fügeteilträgers (1) als Vorsprung (41) über die umgebende Kontaktoberfläche (23) des Grundkörpers (21) abragt.

7. Ventilatorrad nach Anspruch 5 oder 6, **dadurch gekennzeichnet, dass** der Grundkörper (21) des Fügeteilträgers (1) an einer der Kontaktoberfläche (23) entgegengesetzten Gegenoberfläche (47) wenigstens eine Vertiefung (40) aufweist, die seitlich versetzt gegenüber der Einprägung (22) angeordnet und längs der Einprägung (22) erstreckt ist.

8. Ventilatorrad nach Anspruch 7, **dadurch gekennzeichnet, dass** eine Blechdicke des Fügeteilträgers (1) im Bereich der Einprägung (2; 22; 52) um weniger als 50 Prozent gegenüber einer ursprünglichen Blechdicke (43; 63) reduziert ist und dass eine Tiefe (44; 64) der Einprägung (2; 22; 52) wenigstens 50 Prozent der ursprünglichen Blechdicke (43; 63) beträgt.

9. Ventilatorrad nach einem der Ansprüche 5 bis 8, **dadurch gekennzeichnet, dass** die einander gegenüberliegenden Oberflächen (7, 8; 27, 28) des Aufnahmebereichs des Fügeteilträgers (1) einen Abstand aufweisen, der einer Materialstärke (46) des im Aufnahmebereich zu fügenden, insbesondere einzuschweißenden, Fügeteils (4; 24) entspricht.

## Claims

1. Joining process for producing positively bonded connections between metal parts (1, 4; 21, 24; 51, 54), **characterised by** the following steps: embossing of at least one impression (2; 22; 52) into a joining part carrier (1; 21; 51), the impression (2; 22; 52) having a step-like edge region (5, 25; 25, 26); 55, 56) with a course which corresponds to a predetermined joining seam course, applying a joining part (4; 24; 54) to the joining part carrier (1; 21; 51), wherein a connecting region (10; 32) of the joining part (4; 24; 54) is located adjacent to the edge region (5, 6; 25, 26; 52); 55, 56), carrying out a joining operation to create a joining zone (33) between the step-like edge region (5, 6; 25, 26; 55, 56) of the impression (2; 22; 52) and the connecting region (10; 32) of the joining part (4; 24; 54) adjoining the edge region (5, 6; 25, 26; 55, 56), the joining process being carried out as a gluing process and/or as a laser welding process or as a gas shielded arc welding process for metal or as a TIG welding process.

2. Joining method according to claim 1, **characterized in that** the at least one embossing (2; 22; 52) is produced during a trimming process and/or a forming process for the joining part carrier (1; 21; 51).

3. Joining method according to claim 1 or 2, **characterised in that** two step-like edge regions (5, 6; 25, 26) extending parallel to one another are produced during the production of the impression (2; 22), which edge regions have opposing surfaces (7, 8; 27, 28), wherein a spacing (45; 65) of the opposing surfaces (7, 8; 27, 28) corresponds (4; 24) to a material thickness (46) of the connecting region (10; 32) of the joined part.

4. Joining method according to claim 1, 2 or 3, **characterized in that** the joining operation is carried out with a joining robot.

5. Fan wheel with a cover disc formed as an annular joining part carrier (1) for a positively bonded connection to a blade formed as a joining part (4; 24; 54), the joining part carrier comprising a base body of sheet metal, **characterised in that** the base body is provided with at least one indentation (2; 22; 52) on a contact surface (3; 23; 53), which comprises at least one step-like edge region (5, 6; 25, 26) of the joining part; 55, 56), which defines a receiving region for a joining part (4; 24; 54), wherein the edge region (5, 6; 25, 26; 55, 56) is provided along a predeterminable joining seam course for a joining connection between the basic body (1; 21; 51) and the joining part (4; 24; 54), as well as with a joining part (4; 24; 54) which is inserted with an end-face connecting region (10) into the receiving region for the joining part (4; 24; 54) and which is glued or welded to the joining part carrier (1).

6. Fan wheel according to claim 5, **characterised in that** at least one of the edge regions (25, 26) of the joining part carrier (1) projects as a projection (41) over the surrounding contact surface (23) of the base body (21).

7. Fan wheel according to claim 5 or 6, **characterized in that** the base body (21) of the carrier (1) has at least one depression (40) on a counter surface (47) opposite the contact surface (23), which depression (40) is arranged laterally offset with respect to the impression (22) and extends along the impression (22).

8. Fan wheel according to claim 7, **characterized in that** a sheet thickness of the joined part carrier (1) in the region of the indentation (2; 22; 52) is reduced by less than 50 percent compared to an original sheet thickness (43; 63) and **in that** a depth (44; 64) of the indentation (2; 22; 52) is at least 50 percent of the original sheet thickness (43; 63).

9. Fan wheel according to one of claims 5 to 8, **characterised in that** the opposing surfaces (7, 8; 27, 28) of the receiving region of the joining part carrier (1) have a spacing which corresponds to a material thickness (46) of the joining part (4; 24) to be joined, in particular to be welded, in the receiving region.

## Revendications

1. Procédé d'assemblage pour la fabrication de liaisons de matières entre des pièces métalliques (1, 4 ; 21, 24 ; 51, 54) **caractérisé par** les étapes suivantes :
le fait de pratiquer au moins une empreinte (2 ; 22 ; 52) dans un support de pièce à assembler (1 ; 21 ; 51), dans lequel l'empreinte (2; 22; 52) présente une zone de bord (5, 25 ; 25, 26 ; 55, 56) réalisée de façon étagée avec un tracé qui correspond à un tracé de joint d'assemblage prédéfini, l'application d'une pièce à assembler (4 ; 24 ; 54) sur le support de pièce à assembler (1 ; 21 ; 51), dans lequel une zone de liaison (10 ; 32) de la pièce à assembler (4 ; 24 ; 54) est positionnée de manière adjacente à la zone de bord (5, 6 ; 25, 26 ; 55, 56), la mise en œuvre d'un processus d'assemblage pour la création d'une zone de liaison d'assemblage (33) entre la zone de bord (5, 6 ; 25, 26 ; 55, 56) étagée de l'empreinte (2 ; 22 ; 52) et la zone de liaison (10 ; 32), adjacente à la zone de bord (5, 6 ; 25, 26 ; 55, 56), de la pièce à assembler (4 ; 24 ; 54), dans lequel le processus d'assemblage est réalisé en tant que processus de collage et/ou en tant que processus de soudage laser ou en tant que processus de soudage de métal sous gaz de protection ou en tant que processus de soudage TIG.

2. Procédé d'assemblage selon la revendication 1, **caractérisé en ce que** l'au moins une empreinte (2 ; 22 ; 52) est fabriquée pendant une mise en œuvre d'un processus de rognage et/ou d'un processus de façonnage pour le support de pièce à assembler (1 ; 21 ; 51).

3. Procédé d'assemblage selon la revendication 1 ou 2, **caractérisé en ce que**, lors de la fabrication de l'empreinte (2 ; 22), deux zones de bord (5, 6 ; 25, 26) étagées s'étendant parallèlement l'une à l'autre sont produites, qui présentent des surfaces (7, 8 ; 27, 28) opposées les unes aux autres, dans lequel un écart (45 ; 65) entre les surfaces (7, 8 ; 27, 28) opposées correspond à une épaisseur de matériau (46) de la zone de liaison (10 ; 32) de la pièce à assembler (4 ; 24).

4. Procédé d'assemblage selon la revendication 1, 2 ou 3, **caractérisé en ce que** le processus d'assemblage est réalisé avec un robot d'assemblage.

5. Roue de ventilateur avec un disque de recouvrement réalisé en tant que support de pièce à assembler (1) annulaire pour la liaison de matières à une aube réalisée en tant que pièce à assembler (4 ; 24 ; 54), avec un corps de base en tôle,
**caractérisée en ce que**
le corps de base est pourvu sur une surface de contact (3 ; 23 ; 53) d'au moins une empreinte (2 ; 22 ; 52), qui présente au moins une zone de bord (5, 6 ; 25, 26 ; 55, 56) réalisée de façon étagée, qui détermine une zone de logement pour une pièce à assembler (4 ; 24 ; 54), dans laquelle la zone de bord (5, 6 ; 25, 26 ; 55, 56) est réalisée le long d'un tracé de joint d'assemblage pouvant être prédéfini pour une liaison d'assemblage entre le corps de base (1 ; 21 ; 51) et la pièce à assembler (4 ; 24 ; 54), ainsi que d'une pièce à assembler (4 ; 24 ; 54), qui est emboîtée avec une zone de liaison (10) côté frontal dans la zone de logement pour la pièce à assembler (4 ; 24 ; 54) et qui est collée ou soudée au support de pièce à assembler (1).

6. Roue de ventilateur selon la revendication 5, **caractérisée en ce qu'**au moins une des zones de bord (25, 26) du support de pièce à assembler (1) fait saillie en tant que partie saillante (41) de la surface de contact (23) environnante du corps de base (21).

7. Roue de ventilateur selon la revendication 5 ou 6, **caractérisée en ce que** le corps de base (21) du support de pièce à assembler (1) présente sur une surface complémentaire (47) opposée à la surface de contact (23) au moins un évidement (40), qui est disposé latéralement de manière décalée par rapport à l'empreinte (22) et étendu le long de l'empreinte (22).

8. Roue de ventilateur selon la revendication 7, **caractérisée en ce qu'**une épaisseur de tôle du support de pièce à assembler (1) est réduite dans la zone de l'empreinte (2 ; 22 ; 52) de moins de 50 pour cent par rapport à une épaisseur de tôle initiale (43 ; 63) et qu'une profondeur (44 ; 64) de l'empreinte (2 ; 22 ; 52) est d'au moins 50 pour cent de l'épaisseur de tôle initiale (43 ; 63).

9. Roue de ventilateur selon l'une quelconque des revendications 5 à 8, **caractérisée en ce que** les surfaces (7, 8 ; 27, 28) opposées les unes aux autres de la zone de logement du support de pièce à assembler (1) présentent un écart, qui correspond à une épaisseur de matériau (46) de la pièce à assembler (4 ; 24) à assembler, en particulier à souder, dans la zone de logement.
